# EUROPEAN PATENT APPLICATION

(11) **EP 0 739 706 A2**
(43) Date of publication of application: **30.10.1996**
(21) Application number: 96106174.4
(22) Date of filing: 19.04.1996
(51) Int. Cl.: B29C 70/64, B29C 41/08, B29C 41/34

(54) **Method and apparatus for manufacturing polymeric products having a differentiated conductivity**

(30) Priority: 27.04.1995 IT UD950078
(71) Applicant: G.M.P. Poliuretani S.r.l., I-31046 Oderzo (TV) (IT)
(72) Inventor: Damo, Mario, 31045 Motta di Livenza (TV) (IT)
(74) Representative: Petraz, Gilberto Luigi

(57) **Abstract**

Method to obtain polymeric products such as containers, automatic dispensers, casings, tanks, etc., which have zones with a differentiated conductivity and/or localised surface zones characterised by a specific treatment of enrichment and/or surface finishing, the products being obtained by moulding of a polymeric substance (13) such as polyurethane or a thermoplastic material or another analogous material, the method employing particles (14) of a conductive type having the desired functional properties, the conductive particles (14) being introduced into the mould (11) and being subjected there to the action of migrating forces, which cooperate with the inner walls of the mould (11) and which displace the particles (14) towards at least one preferred and pre-determined zone of the mould (11). Device suitable to carry out the above method and comprising a mould (11) into which are injected polymeric substances (13), the device comprising at least means (28) for the electrostatic charging of the conductive particles (14) and acting on those particles before their introduction into the mould (11), the device comprising also at least one source suitable to create a field attracting those conductive particles (14) at least at one pre-determined zone of the walls of the mould (11).

## Description

This invention concerns a method to obtain polymeric products having a differentiated conductivity and also the relative device as set forth in the respective main claims.

The invention is used in the field of the production by moulding of products consisting of a polymeric material, whether those products be containers, automatic dispensers, casings of objects of any desired form and size, tanks, etc., in which is required a differentiation in localised zones of specific physical properties such as electrical conductivity, thermal conductivity or magnetic permeability or other properties, for instance.

The invention is also applied to the obtaining of polymeric products in which is required at least one of the above physical properties over the whole product.

The invention also enables localised surface treatments of enrichment and finishing of the polymeric product to be carried out so as to obtain, for instance, antistatic and scratch-resistant surfaces and/or surfaces having an improved surface hardness which is localised or distributed over the whole product.

Various fields of the state of the art use more and more often polymeric products such as polyurethanes and the like or thermoplastic products owing to their chemical/physical properties and properties of strength and ease of moulding.

These polymeric materials provide substantially thermal and electrical insulation.

In some particular cases it may be required and/or necessary to obtain products in which the properties of conductivity differ from one point to another or in which those properties have a given specific value in some determined and localised zones of the products or over the whole surface of the product.

These properties may be electrical conductivity, thermal conductivity or also magnetisation or electrostatic charging.

Such conditions may be required, for instance, to prevent the build-up of electrostatic charges which can be dangerous in potentially explosive environments such as, for instance, pumps delivering fuel, or else to avoid the depositing of atmospheric powders.

Another purpose is to make possible the varnishing, with electrostatically charged powders, of a polymeric product which is usually hardly suitable for the obtaining of uniform electric fields and which therefore requires the varnishing by means of the use of solvents, with all their unfavourable effects on the environment and health.

Yet another purpose is to increase at least the localised thermal conductivity of polymeric products so as to improve the release of heat from polymeric products which possess scanty thermal conductivity.

A further purpose is to make possible the covering of polymeric products by the galvanic depositing technique, which cannot be used with polymeric products obtained with the traditional methods.

So as to make the surface of a polymeric product capable of electrical conductivity, it is necessary at the present time to cover that product with a conductive film, for instance by spraying a metallised varnish or by metallisation.

These techniques entail very high production costs, if only because they have to be carried out with a step subsequent to the moulding step.

Moreover, the spray-varnishing step entails a plurality of problems linked to the resulting pollution.

Furthermore, the products thus obtained are very delicate and are very readily spoiled because the layer having the property of greater conductivity is very thin and may be readily spoiled.

Another known method arranges to mix the basic material of the polymeric product, in a fluid or granular form or as a powder, with particles having the desired physical properties.

With this method the particles having the desired physical properties are distributed substantially evenly through the whole polymeric mass, and therefore it is not possible to determine localised zones in which those properties are more accentuated than in other parts of the product.

Moreover, in order to ensure a desired property such as thermal or electrical conductivity, for instance, it is necessary to add to the polymeric mass a great quantity of particles having the desired properties.

The present applicants have designed, tested and embodied this invention to overcome the shortcomings of the state of the art and to achieve further advantages.

This invention is set forth and characterised in the respective main claims, while the dependent claims describe variants of the idea of the main embodiment.

The purpose of this invention is to provide a method for the obtaining of polymeric products in which the particles having particular properties of thermal, electrical or magnetic conductivity are arranged and concentrated in pre-determined zones in a desired and pre-determined manner so as to provide the finished products with particular physical properties.

Another purpose of the invention is to provide a device suitable to carry out the above method.

The conductive particles having such particular properties may be, according to the property to be achieved in the product, of a metallic type and consist, for instance, of low-melting metallic alloys or of ceramics or metallic/ceramics or based on carbon or of yet another type.

These particles may also be of a type produced by mechanical alligation or may consist of amorphous powders, such as particles of glass or the like, or else may be of a pigmented type so as to achieve special treatments of enrichment and/or surface finishing.

The method according to the invention arranges to aid the positioning of the particles in preferred zones of the product being obtained or else evenly throughout the whole product.

According to the invention the conductive particles are subjected to migrating forces which displace the particles towards a pre-determined zone of the mould before and/or during the step of forming and filling of the mould so as to increase the concentration of the particles in determined zones of the product rather than in other zones.

It is possible in this way to concentrate the conductive particles, which may be of a metallic type for instance, at least on a desired part of the surface layer of the product so as to obtain an electrically or thermally conductive surface layer whereas the inner layer or another surface of the product remains substantially insulating.

In a preferred arrangement of the invention the conductive particles are electrostatically charged with a charge of a given sign and are then introduced into the mould in the form of a cloud, the shells of the mould being kept open.

The zones of the sidewalls of the mould corresponding to the zones of the product in which it is desired to achieve the properties of differentiated conductivity are electrostatically charged with a charge of a sign opposite to that of the particles so as to attract those particles.

The rest of the mould is electrically insulated so as not to affect or change the capacity of electrostatically attracting the conductive particles.

The affected zones of the sidewalls of the mould are delimited advantageously so as to ensure an exact and determined confining of those conductive particles on the sidewalls.

In a preferred embodiment of the invention this delimitation is achieved by generating electrical fields of the same sign as that of the electrostatically charged particles, these fields preventing the depositing of those particles in the zones not affected.

According to a variant, this confining is achieved physically by suitable delimiting masks.

After the step of depositing of the particles, the method includes a step of localised heating to obtain a first cross-linking and melting of the particles with a resulting at least partial molecular aggregation of the particles.

According to the invention this heating step is carried out by introducing into the open mould appropriate sources of heat, such as infrared lamps, radio-frequency lamps or other similar devices, for instance.

According to a variant the heating step is carried out with the mould closed.

The temperatures to be obtained, the times and the methods of heating are chosen on each occasion according to the specific conductive powders employed and according to the function to be performed on the product by the temperatures and methods.

The mould is then closed and the injection of the polyurethane or thermoplastic material is started.

This injection of the material, owing to the temperature developed by the exothermic reaction in the conversion of the polyurethane material, produces a further heating of the conductive particles fixed to the sidewalls of the mould, and this further heating causes completion of the polymerisation and melting of the particles and the incorporation of the conductive particles in the injected material.

This incorporation of the particles leads to the formation of a perfectly homogeneous and continuous surface layer of the product, and this surface layer incorporates in itself the properties of differentiated and localised conductivity according to the inclusion or not of the conductive particles and according to the possible density of those particles.

According to a variant the electrostatically charged conductive particles are pre-mixed upstream of the mould with the polymeric material to be injected, while the zone of the mould in which it is desired to obtain the specific physical properties are electrostatically charged with a charge of the opposite sign.

In the forming step the particles migrate under the action of the electrostatic charges and are arranged in the zones of the moulds pre-charged with a charge of the opposite sign.

According to an arrangement of the invention the zones of the sidewalls of the mould in which it is desired to concentrate the conductive particles cooperate with a source of a magnetic field that conveys that magnetic field to those sidewalls of the mould.

In this way, when the polymeric mixture containing the particles possessing the desired particular properties is injected into the mould, those particles under the effect of the magnetic field are quickly arranged prevalently in those pre-determined zones of the mould.

In this solution it might be necessary that the zones of the sidewalls cooperating with the source of the magnetic field should be suitably cooled by air or a cooling fluid so as to prevent excessive overheating of those zones.

A further arrangement of the invention arranges to pulverise a metallic element, which is advantageously copper or aluminium, within the mould of which the inner walls have been covered beforehand, for instance by spraying, with an adherence-resistant or releasing layer.

According to this arrangement one solution provides for the pulverisation to take place by spraying with solvent carriers, in which case it is possible to use metallic powders and graphite powders or another analogous material, or else the pulverisation takes place by spraying a metal pulverised by means of an electric arc.

According to a variant the pulverisation takes place by keeping the inside of the mould under a vacuum and by applying an external magnetic field to the mould so as to attract to desired zones the material pulverised by means of an electric arc directly within the mould.

The pulverisation of the metallic element can be associated with a gaseous carrier which conveys in the form of a powder the particles produced by the electric arc onto the sidewalls of the mould.

Next, the polymeric substance is injected and is arranged on the sidewalls of the mould and unites itself with the pulverised layer already on the sidewalls.

The attached figures are given as a non-restrictive example and show some preferred embodiments of the invention as follows:-
- Fig.1: shows a first step of the method according to the invention in its first arrangement;
- Fig.2: shows a second step of the method;
- Figs.3a, 3b and 3c: show with a detail the three successive steps of the method;
- Fig.4: shows a diagram of a variant of the method of Figs.1 to 3;
- Fig.5: shows a moulding device to perform the method of Fig.4;
- Fig.6: shows a variant of the method of Fig.4.

The reference number 10 in the figures denotes generally a method to obtain polymeric products having a differentiated conductivity according to the invention.

The method 10 according to the invention arranges to obtain products by means of moulding with the use of polymeric substances 13, for instance rigid polyurethanes obtained with the RIM (Reaction Injection Moulding) process to which are added particles 14 such as powders of a metal, metal/ceramics, ceramics, carbon, amorphous powders, pigmented powders, powders produced by mechanical alligation or yet other materials.

These powders may have various functions, among which the main, but not the only, functions are those of providing surface zones with a differentiated electrical or thermal conductivity, zones with different magnetic permeability, zones differently re-finished or superficially enriched, specific zones made resistant to scratching, or yet other functions.

The method 10 according to the invention arranges to subject these particles 14, which are added to the polymeric substances 13 constituting the product, to migrating forces which facilitate the arrangement of the particles in specific desired and determined zones of a mould 11.

Filler elements 25 may or may not be used in the mould 11, depending on the form of the desired product.

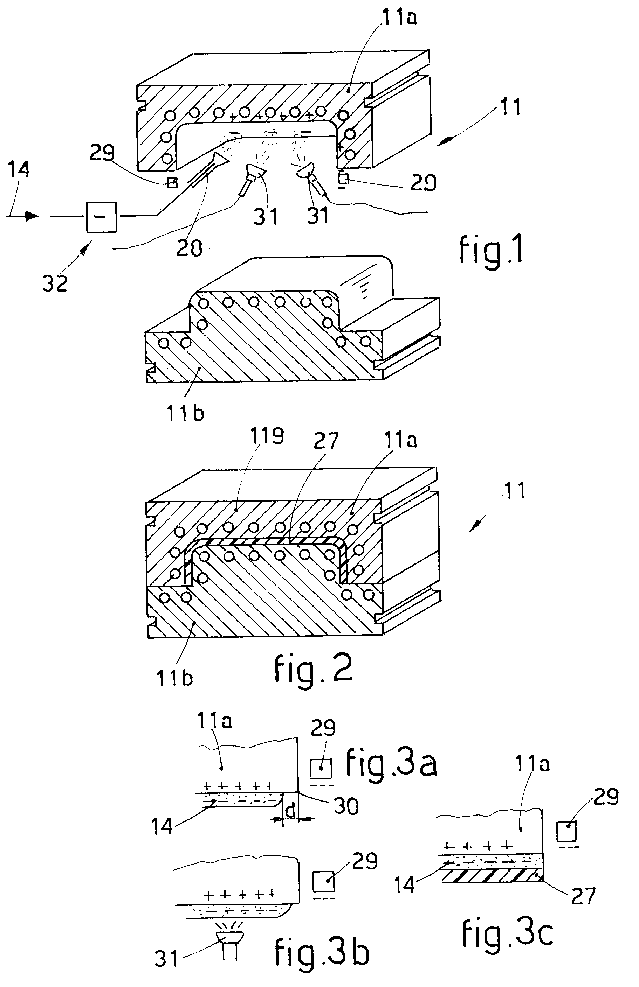

A first arrangement of the invention shown in Figs.1 and 2 provides for subjecting the particles 14 to a step 32 of electrostatic charging with a charge of a given sign, negative in this case.

The sidewalls of the mould 11, at least in the zones corresponding to the zones of the product 27 in which it is desired to obtain the determined properties, are charged with a charge of the opposite sign, a positive sign in this case.

In this case, the depositing of the particles 14 takes place by means of an electrostatic spray-gun system 28 which delivers the particles 14 in the form of a cloud into the open mould 11 and in particular takes the particles 14 to cooperate with the inner walls of the shell 11a which constitutes the negative of the mould 11.

These inner walls, at least in the specific zones, are charged with a sign, positive in this case, opposite to that of the particles 14.

These sidewalls thus exercise a force of attraction which causes the adhesion of the particles 14 at the zones of the mould 11 which correspond to the zones of the product 27 in which it is desired to obtain the required properties.

According to the invention a suitable masking is provided which delimits the zones which are not to be affected by the operation of depositing of the conductive particles 14.

In this case, this masking provides for the use of suitable electrical conductors 29, which generate an electrical field of a sign, negative in this case, the same as that of the particles 14 so as to exert a force of repelling of the particles 14.

According to the invention, in the first step of depositing of the particles 14 (Fig.3a) a certain distance "**d**" is maintained between the corner 30 which delimits the zone of the product 27 to be covered and the extreme limit of depositing of the particles 14, this being achieved by setting a boundary to the electrostatic charging of the sidewalls of the mould 11.

The next step includes a preliminary heating of the particles 14 arranged on the inner walls of the shell 11a, this heating being carried out with heating lamps 31.

The type of lamps 31, the temperature developed thereby, the times and distance of application are selected according to the type of conductive powders 14 used, the type of product 27 to be obtained, the type of function to be performed and the other processing parameters.

This heating causes a first melting or cross-linking of the particles 14 with a resulting enlargement of the layer consisting of the particles 14 and with a covering of part of the distance "**d**" (Fig.3b).

Thereafter, the mould 11 is closed by closing the shell 11b, and the polymeric, polyurethane or thermoplastic product is injected.

This injection with the resulting exothermic reaction due to conversion of the polyurethane material completes the cross-linking of the particles 14 and their polymerisation and causes incorporation of the particles 14 in the injected material so as to constitute one single uniform and continuous layer.

The completion of this cross-linking entails also a further expansion of the layer of particles 14, and this expansion completes the covering of the distance "**d**" up to the limit defined by the corner 30 (Fig.3c).

With this step too completed, the mould 11 can be opened and the product 27 can be extracted therefrom.

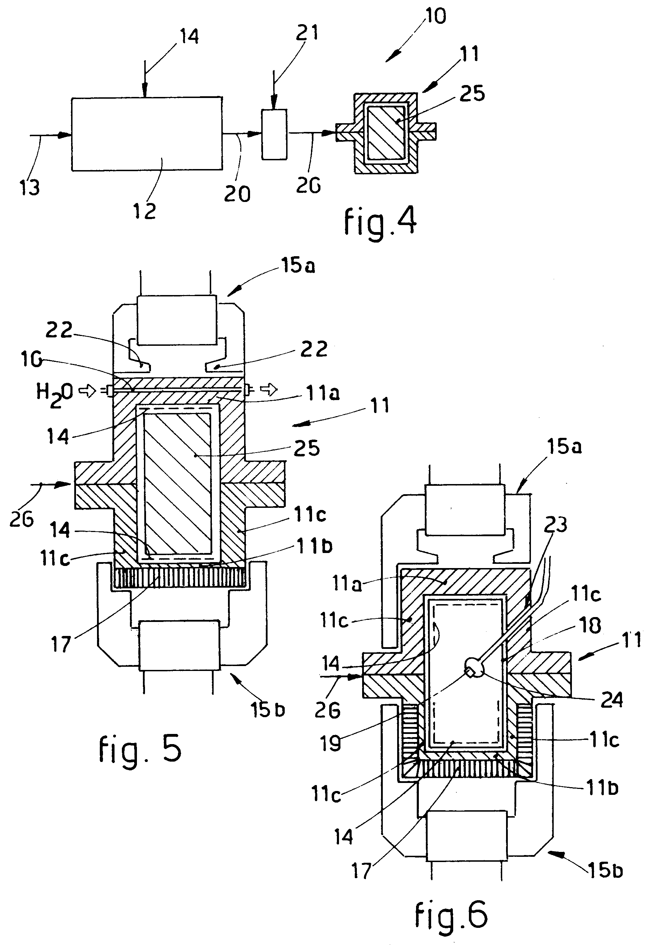

According to the variant shown in Fig.4 the method includes a pre-mixing 12 of the polymeric substances 13 with the electrostatically charged particles 14 to form a mixture 20.

This mixture 20 is then mixed with suitable catalysts 21 to form a flow 26, which is injected into the mould 11, in which at least desired and determined zones of the sidewalls are electrostatically charged with a charge of a sign opposite to that of the particles 14.

A second arrangement of the invention shown in Fig.5 arranges to apply a magnetic field generated by a source 15 of a magnetic field to at least one zone of the mould 11 at which it is desired to obtain the greatest concentration of the particles 14.

This source 15 of a magnetic field conveys the magnetic field to the sidewall of at least one part of the mould 11.

This source 15 of a magnetic field can be embodied with permanent magnets or else, advantageously in this case, with electromagnets comprising a coil which can be momentarily actuated.

In this example, two electromagnets 15a, 15b are shown and cooperate respectively with the upper shell 11a and lower shell 11b of the mould 11.

The upper electromagnet 15a has the shape of an overturned "**U**" including at its lower end elements 22 shaped like an elephant's foot and affects only the upper wall of the upper shell 11a of the mould 11.

The lower electromagnet 15b has a **U**-shaped form of which the upper terminal parts cooperate also partially with a zone of the lateral sidewalls 11c of the mould 11. In this way the particles 14 will be positioned also on that zone of the lateral sidewalls 11c of the mould 11.

The sources 15 of a magnetic field can be conformed in a desired manner to affect well-defined zones of the sidewalls of the mould 11, depending on the particular requirements and effects to be obtained.

The sidewalls of the mould 11 which are affected by the magnetic field generated by the source 15 of a magnetic field are cooled advantageously in a manner such as will prevent possible excessive overheating.

In this case, the upper sidewall of the upper shell 11a includes at least one duct 16 for circulation of a cooling fluid, whereas the lower sidewall of the lower shell 11b includes fins 17 for cooling with air.

In the case of magnetic fields generated by electromagnets 15 it is possible to modulate as desired the force of migration acting on the particles 14 by altering the intensity of the current feeding the electromagnets 15, for instance according to the thickness, resistivity and geometric shape of the sidewall.

In another arrangement of the invention shown in Fig.6 a film of an adherence-prevention substance or releasing substance 18 is applied to the inner surface of the mould 11.

Next, a vacuum is created and the pulverisation of a piece of copper or aluminium 19 is carried out by means of an electric arc.

In this case, the lateral sidewall 11c of the mould 11 contains a hole 23 for the entry of a gripper element 24, between the jaws of which is positioned the piece of copper or aluminium 19.

According to a variant which is not shown here, the pulverisation can be carried out by using means which are fed by a continuous metallic wire, which is associated at its end with an electric arc that determines the pulverisation of the wire and that cooperates with a gaseous flow conveying the metallic particles 14 thus generated onto the inner walls of the mould 11.

According to another variant, the application of the conductive layer to the layer of the adherence-prevention or releasing substance 18 takes place by direct spraying with the possible use of a solvent.

When the application of the layer of conductive particles has taken place, the polymeric substances 13 are injected into the mould 11 and unite themselves with the layer of pulverised material therein.

In the form of embodiment shown in Fig.6 the upper electromagnet 15a cooperates with the upper sidewall of the upper shell 11a and with only one lateral sidewall 11c, whereas the lower electromagnet 15b cooperates with the lower sidewall of the lower shell 11b and with both lateral sidewalls 11c.

The form of the electromagnet 15 conditions the magnetic field generated thereby and therefore also the zones in which the conductive particles 14 become positioned.

## Claims

1. Method to obtain polymeric products such as containers, automatic dispensers, casings, tanks, etc., which have zones with a differentiated conductivity and/or localised surface zones characterised by a specific treatment of enrichment and/or surface finishing, the products being obtained by moulding of a polymeric substance (13) such as polyurethane or a thermoplastic material or another like material, the method employing particles (14) of a conductive type having the desired functional properties, the method being characterised in that the conductive particles (14) are introduced into the mould (11) and are subjected there to the action of migrating forces, which cooperate with the inner walls of the mould (11) and which displace the particles (14) towards at least one preferred and pre-determined zone of the mould (11).

2. Method as in Claim 1, in which the conductive particles (14) are electrostatically charged with a charge of a determined sign before being introduced into the mould (11), while the pre-determined zones of the mould (11) are electrostatically charged with a charge of the opposite sign.

3. Method as in Claim 1, in which the pre-determined zones of the mould (11) are subjected to a magnetic field which attracts the conductive particles (14).

4. Method as in Claim 2, in which the electrostatically charged conductive particles (14) are introduced in the form of a cloud into the mould (11) kept open, the particles (14) being caused to adhere by electrostatic attraction to the walls of the mould (11) at the pre-determined zones, and then the polymeric substance (13) is injected when the mould (11) has been closed.

5. Method as in Claim 4, in which a step of at least localised heating is included between the introduction of the conductive particles (14) and the injection of the polymeric substance (13) and is suitable to generate the at least partial melting or cross-linking of the conductive particles (14) adhering to the sidewalls of the mould (11).

6. Method as in Claim 5, in which the step of at least localised heating is carried out with the mould (11) open.

7. Method as in Claim 5 or 6, in which a confining of the conductive particles (14) is provided to delimit the zones of adherence of those particles (14) to specific zones of the sidewalls of the mould (11).

8. Method as in Claim 7, in which the confining includes the generation of an electrical field of a sign the same as that of the conductive particles (14).

9. Method as in Claim 7 or 8, in which the confining includes the use of delimiting masks.

10. Method as in any of Claims 1 to 3 inclusive, in which the conductive particles (14) are mixed with the polymeric substances (13) before being injected into the mould (11).

11. Method as in Claim 1, in which, after the inner walls of the mould (11) have been covered with an adherence-prevention or releasing film (18), a vacuum is created within the mould (11) and thereafter a covering material is pulverised therein in the form of conductive particles (14) before the polymeric substances (13) are injected.

12. Method as in Claim 11, in which the conductive particles (14) forming the covering material are applied by being sprayed.

13. Method as in Claim 11, in which the conductive particles (14) forming the covering material are applied by means of pulverisation with an electric arc.

14. Method as in any claim hereinebfore, in which the conductive particles (14) consist of powders selected on the basis of their function from the following types: metallic powders, low-melting metallic alloys, ceramic powders, metallic/ceramic powders, carbon powders, powders produced by mechanical alligation, amorphous powders, pigmented particles or other analogous materials.

15. Device suitable to carry out the above method and comprising a mould (11) defined by at least one positive or lower shell (11b) and by one negative or upper shell (11a), into which mould (11) are injected polymeric substances (13), such as polyurethane, a thermoplastic material or another analogous material, and conductive particles of a type suitable for the desired property to be achieved and/or for the specific surface treatment to be carried out on the polymeric product (27) to be obtained, the device being characterised in that it comprises at least means (28) for the electrostatic charging of the conductive particles (14) and acting on those particles before their introduction into the mould (11), the device comprising also at least one source suitable to create a field attracting those conductive particles (14) at least at one pre-determined zone of the sidewalls of the mould (11).

16. Device as in Claim 15, in which the source of the magnetic field (15) is a momentarily actuatable electromagnet.

17. Device as in Claim 15, in which the source of the magnetic field (15) is a permanent magnet.

18. Device as in Claim 15, which comprises at least localised heating means (31) cooperating with the specific zones of the inner walls of the mould (11) after introduction of the conductive particles (14) and after adhesion of those particles (14) to those inner walls.

19. Device as in Claim 15, which comprises means to confine the conductive particles (14), the means being associated with pre-determined zones of the walls of the mould (11).

20. Device as in Claim 19, in which the confining means comprise conductors (29) generating a force to repel the conductive particles (14).

21. Device as in Claim 19 or 20, in which the confining means comprise a delimiting mask surrounding those pre-determined zones.

22. Device as in any of Claim 15 to 21 inclusive, in which the wall of the mould (11) cooperating with the source of the magnetic field (15) comprises means (16, 17) performing cooling with a circulation of fluid.
